# EUROPEAN PATENT APPLICATION

(11) **EP 2 071 802 A1**
(43) Date of publication of application: **17.06.2009**
(21) Application number: 07254826.6
(22) Date of filing: 12.12.2007
(51) Int. Cl.: H04L 29/06

(54) **Access control**

(71) Applicant: British Telecommunications public limited company, 81 Newgate Street London EC1A 7AJ (GB)
(72) Inventor: Brown, Martin Alan, Bicester, Oxon, OX26 6XN (GB)
(74) Representative: Lloyd, Barry George William

(57) **Abstract**

A telecommunications interface device such as a router has an interface 11 for connection to a telecommunications network 3, and an interface (12/13) for connection to one or more a user terminals 4. Control means 14,15,17 control the interfaces to intercommunicate and responds to commands from a connected user terminal 4 to control administrative functions of the interface device. A user operable switch 16 is located on the interface device and the control means is operable only upon actuation of the switch to enter a privileged access mode, and to leave the privileged access mode after upon expiry of a predetermined time limit. It permits initiation of access for control of these administrative functions only when in the privileged access mode.

## Description

The present application is concerned with access control for telecommunications systems.

The present invention is defined in the claims.

One embodiment of the invention will now be described, by way of example, with reference to the accompanying drawings.

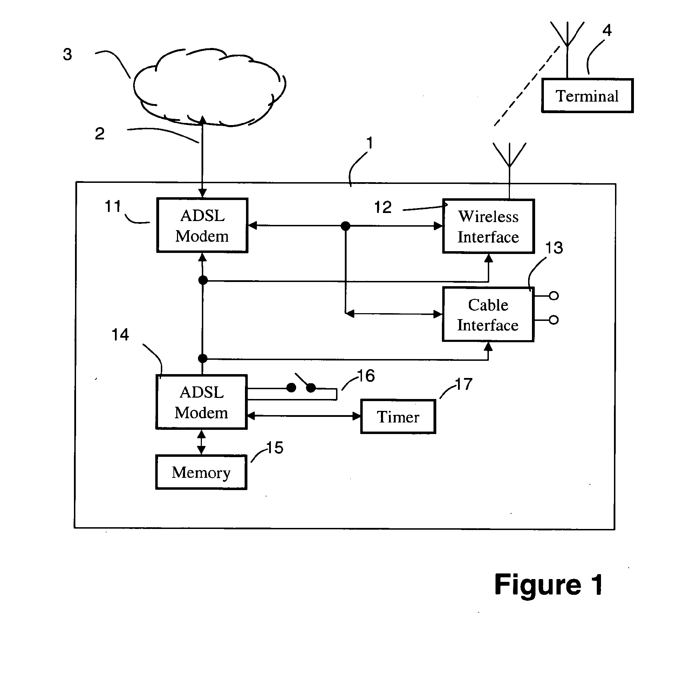

The router 1 of Figure 1 comprises an ADSL modem 11 for interfacing via a telephone line 2 to a wide area digital telecommunications network 3 such as the internet (not shown). The router serves to relay signals to and from a terminal 4 (or more than one terminal) by means of a wireless interface, typically operating in accordance with the IEEE 802.11 b or g standard. Instead, or in addition, the router may also have a cable interface 13 whereby a terminal can connect using a wired connection such as a USB or Ethernet.

The terminal 4 along with any other terminals connecting to the router via the wireless interface 12 and/or the cable interface 13 together form a local area network.

The operation of the router is controlled by a control unit 14 having a processor controlled by software stored in memory 15. One function of the software is to control access by terminals such as the terminal to the wireless interface 12, so that unauthorised users may not gain access. This is accomplished by encryption using a suitable protocol such as the Wired Equivalent Privacy (WEP) or WiFi Protected Access (WPA/WPA2) protocol defined by the IEEE 802.11 standard, so that only a terminal in possession of the correct WEP or WPA/WPA2 key for the router 1 can communicate with it.

The software also has an administration section so that a user of the terminal 4 can examine and/or change various settings such as
- Allow connections from the Wide Area Network to the router itself for management purposes or to connect to devices on the Local Area Network (or to devices on any subsequent network that may be connected to the Local Area Network).
- Turn on, off or configure network protection rules or logging including firewall or intrusion detection capabilities
- Adjust ADSL configuration
- Attach or remove storage to the router
- Alternative authentication server configuration
- Backup or restore device configuration settings of the router
- Create or modify firewall and routing configuration settings for the router
- Define IP addresses / ranges for terminals attached to the router
- Manager or replace management server location details
- Disconnect the router from the wide area network or local area network(s)
- Display of information as to what devices are connected to the router
- Display of information which could be considered to be an aid in an attempt (successful or otherwise) to penetrate or compromise the router itself or devices attached to the device by wireless or wired connections
- Display or change wireless settings, such as state (On/Off), Speed, Wireless Protocol, Service Set Identifier (SSID), Wireless Channel, type of secure encryption or wireless encryption key, keyphrase or passphrase.
- Display or change wired network setting such as speed, duplex and framing.
- Examine or change Local Area Network (LAN) settings, such as IP address, Domain Name Service (DNS) and Gateway or Proxy.
- Examine or change Wide Area Network (WAN) settings such as ISP provided connection credentials and configuration options for the WAN to successfully maintain a connection
- Initiate or request software updates to be applied to the router
- License management for new or existing capabilities of the router or capabilities that the router shall be able to take advantage of
- Reboot / restart the router
- Reset the router to a previous configuration or a baseline / factory default
- Setup or modify telephony (VoIP) configuration for the d router
- Virtual Private Network (VPN) keys and/or connection settings

Access to these functions requires not only that the terminal either is directly connected to the device through a wired connection, or, if connecting via wireless, has the appropriate network level WEP/WPA/WPA2 key, but also that the software is programmed to present the user with a login screen for entry of a username and password which the software verifies before allowing access to these administrative functions.

As thus far described, the construction and operation of the router is conventional.

However, although the requirement to enter a username and password for access to administrative functions offers a degree of security, there remains a degree of risk that an unauthorised user, or process, accessing the device from the wide area or local area network(s) may attempt to gain access ("hack in") either intentionally or in error to the device and make unauthorised changes to the device; especially noting that such equipment is often shipped already set up with a publicly documented default username and password (which in some cases may be no password) and that not all users may be sufficiently security conscious and/or computer literate to change the default settings to ones less easy for the hacker to guess. A hacker thereby gaining access to the router would then be able to make subsequent unauthorised changes to the operation of the router.

Vectors of attack against the router could be specific or opportunistic, both directly from the Wide Area Network against the device, or via a proxy operating within the Local Area Network achieved through a variety of sources such as malicious software or via crafted scripts or instructions executed on terminals to the benefit of those attempting to gain access. The timing of the attacks can be random or persistent.

Thus, the router 1 also has a switch 16 which can be operated by the user, and the status of the switch can be read by the control unit 13. The basic idea is that the router can be switched into a privileged access mode, but only by a user who has physical access to the router, and that access to administrative functions is prohibited except when the router is in this privileged access mode. The switch 16 can be one with conventional moving contacts, perhaps operated by a button; or can be of the touch-sensitive type.

In more detail, operation is as follows:

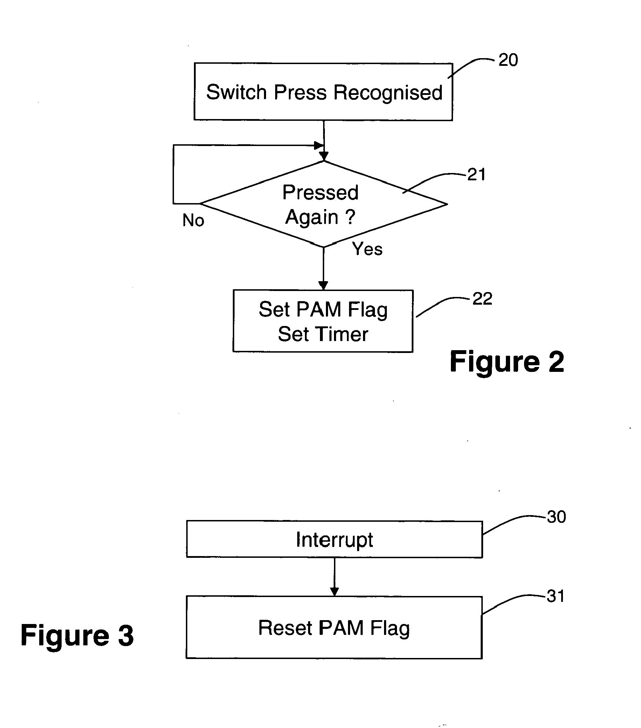

### Referring first to the flowchart of Figure 2 -

20 The control unit recognises that the switch has been pressed.
21 The control unit waits for the switch to be pressed a second time; if it is not pressed within 2 seconds, the process returns to the beginning. This feature is primarily to allow the switch to be used for other purposes also and may be adjusted to more or less presses within 2 seconds to allow this capability to be merged with existing functions of the device which use the same switch and require one or more presses for other functions.
22 The control unit is switched into privileged access mode, by setting a flag in an assigned memory location which may be protected or locked to protect against malicious or other processes setting this flag inadvertently or deliberately. A timer 17 is set to a suitable timeout period, perhaps 5 minutes. The timer is arranged to generate an interrupt signal to the control unit upon expiry of the timeout period; the control unit responds to receipt (30, Figure 3) of the interrupt by resetting (31) the privileged access flag. If desired, a visual indication may be given that the router is in privileged access mode, perhaps by a light (unique to this task or otherwise) flashing in a distinctive rhythm or by an audible acknowledgement of the device entering privileged access mode.

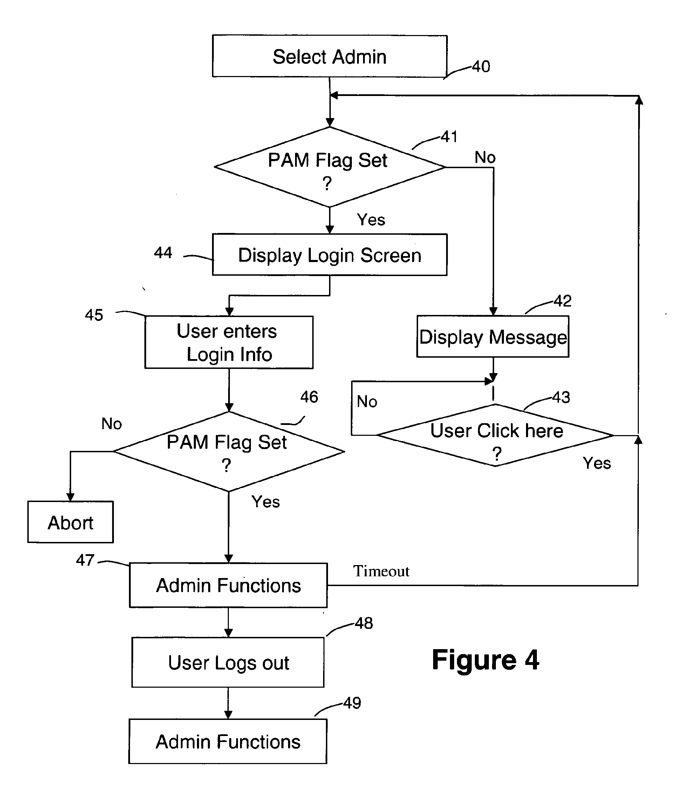

In Figure 4, at Step 40, we suppose that the user has selected a menu option for access to administrative functions or has attempted to directly access an administrative menu without passing through the expected route; such as using a stored URL to jump to a specific administrative page. The control unit then checks (41) whether privileged access flag is set. If not, a warning message is transmitted (42) to the terminal 4 for display, for example "As a security precaution, access to the Advanced settings of the router requires that the router be placed into Admin Mode. This can be done by pressing the button. When the router is in Admin mode Click Here to log in". A graphic may be shown to indicate where the button is. Then (43) the control unit waits to give the user the opportunity to press the button as per step 20/21 and switch the router into privileged access mode, until the user clicks on the "click here" point, whereupon control reverts again to Step 41 to check whether the privileged access flag has indeed been set.

If the privileged access flag is found (on the first or subsequent execution of Step 41) to be set, then at step 42 the user is sent the Administrative Section login screen (Step 44), following which he may log in (45) as described above. This login is required to take place within the required interval after pressing the button; thus if the interrupt occurs whilst the login screen, is displayed, but before the log in process is complete, the login process is terminated. Rather than using the interrupt, the control unit could check (46), following successful completion of Step 45, whether the privileged access flag was still set, and if not, to abort the login. Once login is complete, the user performs such administrative tasks as he wishes (47) until he logs out.

Preferably, once a user is logged in, any additional attempts to access the administrative functions of the router from a different terminal shall be rejected until such time as the first user has logged out or timed out and the privileged access flag is reset; at which point the second user shall begin at step 40.

Preferably, there shall be the option, only available once the user has successfully gained access to the administrative functions, for the user to disable the functionality of the switch for administrative access unless the button has been pressed as per section 20/21 where the user believes this to be in his best interests. It is recommended that an appropriate warning as to the risks associated with this option are displayed and a further confirmation of the action required before disabling this functionality.

Preferably, once the user is in privileged access mode and has successfully logged in, the router shall not require the switch 16 to be pressed again until such time as the administrative login has been closed (at 48) (i.e. a browser session is closed, or the user logs out or is timed out); then the privileged access flag is reset (49), even if it is still within 5 minutes from the entry into privileged access mode, and the user must press the switch again if he wishes to reinitiate privileged access mode.

Preferably there shall be a timeout for administrative logins if there is no activity for a predetermined period (say 5 minutes). If desired, imminent timeout could be signalled to the user by a visual indication and/or an audible warning (perhaps by playing a piece of music). Where an administrative login has been timed out, the system shall revert to Step 41.

It will be observed from this description that access to the administrative functions of the router is conditional on it being in privileged access mode, regardless of other authentication data.

It will also be observed that the window of attack opportunity for unauthorised access to and/or modification of the router is reduced to the period of time that the device is in privileged access mode.

Preferably where there are capabilities within the device considered to be of higher sensibility or risk, such as administrative password change or the option to disable the functionality of the button the access to those capabilities; may be made conditional on a further press of the button, to protect against those attack vectors which can be achieved through an existing successful administrative login.

## Claims

1. A telecommunications interface device comprising
an interface (11) for connection to a telecommunications network (3);
an interface (12/13) for connection to a user terminal;
control means (14,15,17) for controlling the interfaces to intercommunicate and operable in response to commands from a connected user terminal (4) to control administrative functions of the interface device; and a user operable switch (16) located on the interface device;
wherein the control means is operable only upon actuation of the switch to enter a privileged access mode and to leave the privileged access mode after upon expiry of a predetermined time limit, and to permit initiation of access for control of said administrative functions only when in privileged access mode.

2. A telecommunications interface device according to claim 1 in which the interfaces interconnect to permit communication between the terminal (3) and the network (3) irrespective of whether the control means is in the privileged access mode or not.

3. A telecommunications interface device according to claim 1 or 2 in which access to administrative functions is conditional also upon entry of a username and password while the control means is in the privileged access mode.

4. A telecommunications interface device according to claim 3 in which, following successful entry of the username and password, the user continues to have access to the administrative functions after the timer time limit has expired.

5. A telecommunications interface device according to claim 4 in which the user's access to the administrative functions ceases upon receipt of a user command to disengage from administrative functions or upon the expiration of a predetermined time limit during which no user input is received.

6. A telecommunications interface device according to any one of the preceding claims in which the control means is operable following receipt of a user command to disengage from administrative functions, to leave the privileged access mode despite the timer time limit not having expired.
